# EUROPEAN PATENT APPLICATION

(11) **EP 4 607 664 A1**
(43) Date of publication of application: **27.08.2025**
(21) Application number: 24158531.4
(22) Date of filing: 20.02.2024
(51) Int. Cl.: H01M 50/204, B29C 44/04, H01M 50/249, H01M 50/293

(54) **BATTERY TRAY COMPRISING A MULTI-DENSITY FOAM COMPONENT AND METHOD FOR PRODUCING THE SAME**

(71) Applicant: Wuhan Lotus Cars Co., Ltd., Wuhan, Hubei (CN)
(72) Inventor: Stolzenburg, Marc Patrick, 60435 Frankfurt am Main (DE)
(74) Representative: Elzaburu S.L.P.

(57) **Abstract**

The present invention relates to a battery tray for a vehicle battery. The battery tray comprises a multi-density foam component for improved crash protection of the battery cells wherein at least one segment of the multi-density foam component is designed to distribute the load of an impact and transfer it around the battery cells and at least one segment is designed to reduce the load onto the battery cells during compression of the multi-density foam component.

## Description

The present invention relates to a battery tray for a vehicle battery, the battery tray comprising a multi-density foam component. The present invention further relates to a method for producing a respective multi-density foam component.

### Background

One particularly important aspect of vehicle safety is passive crash protection. This includes not only a protection of the passenger cell by means of energy absorbing structures which may deform during a collision but also a corresponding protection of vehicle components which may pose an increased risk in case of damage, such as the vehicle battery or the fuel tank. At the same time lightweight of these structures is required in order to keep the overall weight of the vehicle low for energy efficient drive, be it with conventional fuel or electric. The limiting factor on battery side is cell damage, which has to be avoided under all circumstances. Cell damage can occur by high loads onto the battery cell which are accompanied by high deformations of the cell. If the vehicle battery is a traction battery of a hybrid or electrical flat floor-vehicle where the loads are directly introduced in one line into the battery, a reduction of the load level of the single battery cell is particularly important.

There is still need for improvement of the crash protection of the battery cells in a battery tray for a vehicle battery.

### Summary of this disclosure

In a first aspect, this disclosure relates to a battery tray for a vehicle battery comprising
- one or more battery cells;
- at least one multi-density foam component having at least two integral sections of different densities; and
- at least one rigid supporting structure;
wherein the at least one multi-density foam component is at least partially arranged between the one or more battery cells and the at least one rigid supporting structure; and the integral section having a higher density abuts at least partially the rigid supporting structure and the integral section having a lower density abuts at least partially the battery cells.

The disclosure hence provides a battery tray comprising a multi-density foam component for improved crash protection of the battery cells wherein at least one segment of the multi-density foam component is designed to distribute the load of an impact and transfer it around the battery cells and at least one segment is designed to reduce the load onto the battery cells during compression of the multi-density foam component.

When referring in this disclosure to the integral sections to "abut" a structure, this is to be understood as being arranged in close proximity of it but not necessarily being in direct contact with it. The two respective surfaces may also have partial or no contact at all. For example, between the integral section having a lower density and the battery cells there may be a small gap for allowing an air flow for ventilation purposes. Gaps of up to 5 cm, preferably up to 3 cm or up to 1 cm, are considered to be abutting structures.

The at least one multi-density foam component having at least two integral sections of different densities. In other words, the at least one multi-density foam component has at least one integral section having a higher density relative to at least one other integral section. The at least one other integral section thus has a lower density relative to the at least one integral section. The at least one multi-density foam component can have an integral section having the highest density among all integral sections of the at least one multi-density foam component. The at least one multi-density foam component can have an integral section having the lowest density among all integral sections of the at least one multi-density foam component.

One or more battery cells means at least one battery cell. The battery tray can comprise multiple battery cells.

In a second aspect, this disclosure relates to a method for producing a multi-density foam component having at least two integral sections of different densities comprising
(a) providing a mold having a cavity which is open on one side and corresponds to a desired outer surface of a first integral section of the multi-density foam component;
(b) filling raw materials for a first foam creation process into the cavity of the mold;
(c) closing the open side of the cavity of the mold with a first closing plate having a surface corresponding to a desired inner surface of the first integral section of the multi-density foam component, performing the foam creation process to create the first integral section of the multi-density foam component, and removing the first closing plate from the cavity;
(d) filling raw materials for a second foam creation process into the cavity of the mold including the first integral section;
(e) closing the open side of the cavity of the mold with a second closing plate having a surface corresponding to a desired inner and/or outer surface of a second integral section of the multi-density foam component, performing the foam creation process to create the second integral section of the multi-density foam component, and removing the second closing plate from the cavity, wherein an outer surface of the second integral section of the multi-density foam component is formed by the inner surfaces of the first integral section and/or the cavity and/or the second closing plate; and
(f) repeating steps (d) and (e) for each further desired integral section;
   wherein the steps of filling raw materials into the cavity and closing the open side of the cavity of steps (b)/(c) and (d)/(e) may be performed in reverse order.

In a further aspect, this disclosure relates to a battery tray for a vehicle battery being configured for being provided with one or more battery cells, wherein the battery tray comprises
- at least one multi-density foam component having at least two integral sections of different densities; and
- at least one rigid supporting structure;

wherein the at least one multi-density foam component is at least partially arrangeable between the one or more battery cells and the at least one rigid supporting structure, when the battery cells are installed on the battery tray; and
the integral section having a higher density abuts at least partially the rigid supporting structure and the integral section having a lower density abuts at least partially the battery cells.

### Details of this disclosure

Details of this disclosure relate to the aspects described in the summary of disclosure. Any of the features of the embodiments described hereinafter may relate to the battery tray for a vehicle battery as well as the method for producing a multi-density foam component having at least two integral sections of different densities.

In embodiments, the vehicle battery may be a traction battery of a hybrid or electrical vehicle. As mentioned above, the reduction of the load level of the single battery cells of such batteries is particularly important, especially in case of flat floor-vehicles where the loads are directly introduced in one line into the battery. Here, the present disclosure can show the full potential of its improved protective structure. If the vehicle battery is a traction battery, the term "battery cell" is to be understood to equally refer to the electronic components of these cells which are likewise to be protected from damage as the single electric cells.

The present disclosure improves the crash protection of the battery cells by arranging a single foam part comprising multiple foam densities inside the battery tray. This multi-density foam component (MDFC) is applied between a rigid supporting structure of the battery tray, e.g. the side members, and the battery cells. The inventors have found that by using a multi-density foam component at this place, a very effective load diverting and reduction can be achieved which combines a superior protection effect with low weight. Moreover, the application of a foam enables a steady energy absorption over the whole deformation process without arising failure as seen for e.g. plastics structures.

For a given type of foam, the stiffness and compression hardness of the foam may be considered to be basically proportional to its density. Hence, a specific function can be assigned to each single foam density in a component which is designed for reducing the load on the battery cells. To this end, the multi-density foam component is not limited to two integral sections with different densities or a single type of foam but may be tailored as required by the design of the battery cells and their neighboring parts to achieve optimal results in terms of force distribution and absorption.

A first integral section with a higher foam density and resulting higher stiffness and compression hardness can be used to distribute the load of a crash impact and transfer it around the cell into neighboring or connecting parts or top and bottom areas of the cells. Moreover, the foam is capable of absorbing impact energy during its compression. In general, if more than two integral sections are used, the integral section with the highest foam density is used as the load transferring foam structure.

A second integral section with a lower foam density is included into the multi-density foam part which is overlapping with the vulnerable parts, e.g. the battery cells, sensitive electronics, or similar. These lower foam density sections can be used to reduce the load onto the cell during compression of the multi-density foam component, which leads to higher allowable intrusions into the battery tray without loading and therefore damaging of the battery cells. They add to the overall energy absorption but transfer less load to surrounding components. However, the lower density foam sections may additionally stabilize the load transferring foam structures during compression.

In embodiments, the integral section having a highest density of the at least one multi-density foam component essentially may have a cross-sectional shape of a C- or U-shape, a pointed arch shape, or a semicircular shape. The "C- or U-shape" is particularly referring to a rectangular shape of the letters while the "semicircular shape" refers to a rounded shape. The load transferring foam structure may have various geometrical shapes which all have in common that there is one closed side of the shape which is to be arranged towards the expected impact side of the rigid supporting structure and that extends towards an open side of the shape ending in two separate areas to be arranged spaced apart from the battery cells and sensitive electronics. This way, the load of an impact on the rigid supporting structure will be guided around the battery cells.

In embodiments, at least one surface of the integral section having a highest density of the at least one multi-density foam component may comprise a rib structure. The basic shape of the high density load transferring foam structure can additionally be reinforced by these rib structures which can be arranged on the surface facing to the inside of the battery tray or to the outside and in vertical or horizontal orientation. This allows for the creation of a higher geometrical stiffness and compression hardness of the whole structure in the direction of the impact towards the battery cells.

In embodiments, the integral section having a highest density of the at least one multi-density foam component essentially may have a C- or U-shape with an open side of its contour facing towards the inside of the battery tray and the integral section(s) having a lower density may be arranged inside the contour. This design is particularly useful for stabilizing the load transferring foam structures during compression against uncontrolled deformation and/or collapse.

In embodiments, a density of the at least one multi-density foam component may span a range of from 50 g/l to 400 g/l or from 60 g/l to 375 g/l or from 75 g/l to 350 g/l. This range has been found to provide useful foam properties for the respective functions to be achieved with the integral sections.

In embodiments, a density of the integral section having a higher density may span a range of from 225 g/l to 400 g/l or from 250 g/l to 375 g/l or from 275 g/l to 350 g/l and/or a density of the integral section having a lower density may span a range of from 50 g/l to 175 g/l or from 60 g/l to 150 g/l or from 75 g/l to 125 g/l. These ranges have been found to provide useful foam properties for the respective functions to be achieved with the integral sections. Particularly, the relation of the densities of the two integral sections have been found to provide advantageous results for the overall structure of the multi-density foam component.

In embodiments, the at least one multi-density foam component may comprise one or more of expanded polypropylene (EPP), expanded polystyrene (EPS), expanded polyethylene (EPE), polyurethane rubber (PUR), and polyethylene terephthalate (PET) foam. These types of foams have proven themselves to be particularly suitable for the manufacture of the multi-density foam component and its different functions. As mentioned above, the multi-density foam component may also be made using different types of foam. The only limitation regarding a selection of two or more different foam types is compatibility of the foams and their respective raw materials during the foam creation process.

In embodiments, a rocker may abut at least partially a face of the at least one rigid supporting structure opposite a face where the at least one multi-density foam component abuts. A rocker which is arranged on the outside surface of the battery tray where the impact of a crash is expected can help to distribute the load of the impact more evenly into the multi-density foam component and, therefore, improve the crash protection results.

The method for producing the multi-density foam component is sequential. The single integral sections of different densities are consecutively produced within a mold having a cavity which is open on one side and can be closed with different closing plates. For the first integral section, the outer contour is defined by the cavity of the mold and a first closing plate, and the inner contour is defined by the first closing plate. The mold is filled with raw materials for a first foam creation process and closed with the first closing plate.

Any foam creation reaction which can be performed in a mold may be used for the multi-density foam component. Hence, the steps of filling raw materials into the cavity and closing the open side of the cavity with the closing plate may be performed in reverse order as may be required by the foam creation reaction for each integral section. For example, a urethane foam reaction mixture may be poured into the cavity before closing the mold while an injection molding process for expanded polyethylene requires closing the mold before injecting the molten polyethylene with the blowing agent.

After completion of the foam forming process, the first closing plate is removed from the cavity and the raw materials for second integral section are filled into the mold which is closed with the second closing plate. The respective cavities for the foam are either defined on all sides by the mold and the closing plate (first integral section) or by a combination also of surfaces of the preprocessed integral sections (second and further integral sections). After the completion of the second foam forming process, again the second closing plate is removed from the mold. Thereafter, either the process is repeated for each further integral section or the finished multi-density foam component can be removed from the mold.

If pressure has to be applied on the raw materials for the foam, the manufacturing process may be conducted from high to low density sections.

### Short description of the Figures

- **Figure 1**: shows a cross-sectional side view of a battery tray according to the disclosure.
- **Figure 2**: shows the results of a simulated pole intrusion test without a rocker.
- **Figure 3**: shows the results of a simulated pole intrusion test with a rocker.
- **Figure 4**: shows the load transfer of a MDFC with two densities according to the disclosure around the battery cells.
- **Figure 5**: shows the MDFC with two densities of Figure 4.
- **Figure 6**: shows a C-shaped first integral section of the MDFC with two densities of Figure 5.
- **Figure 7**: shows an alternative first integral section of the MDFC with two densities of Figure 5 with a C-shape including a rib structure.
- **Figure 8**: shows the mold, first closing plate, and second closing plate of the production steps of the MDFC with two densities of Figure 5.

### Examples

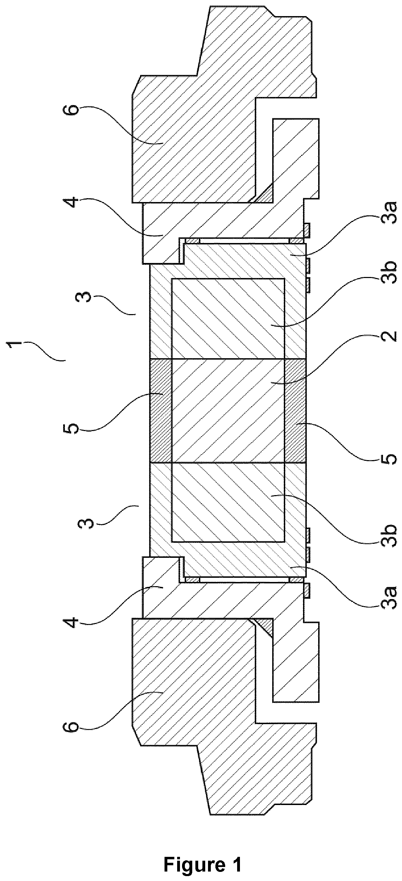

**Figure 1** shows a cross-sectional side view of a battery tray **1** according to the disclosure. In the center of the battery tray **1** are positioned the battery cells **2** which are grouped by the connecting parts **5**. To the left and right of the battery cells **2** are arranged multi-density foam components **3**. They are shown here in direct contact with the battery cells **2** and connecting parts **5**, respectively, but might also have a gap in between them for ventilation purposes. The first integral section **3a** is the higher density section which contacts the connecting parts **5** with the horizontal parts of its C-shape for diverting the load of an impact into the connecting parts **5**. The second integral section **3b** is the lower density section which contacts the battery cells **2**. The vertical part of the C-shape of first integral section **3a** contacts the supporting structure **4** of the battery tray **1**. On the outside of the supporting structure **4** is arranged an optional rocker **6**.

With the configuration as shown in Figure 1, simulations of a pole crash have been calculated wherein the pole impacts from the left onto either the rocker **6** or directly on the supporting structure **4**, i.e., the simulations have been made with and without the presence of a rocker **6**.

As comparative examples, two simulations have been carried out with homogeneous foam blocks of the same shape with densities of 130 g/l and 220 g/l. The example of the multi-density foam component **3** according to the disclosure had a first integral section **3a** with a density of 300 g/l as the load carrying structure and a second integral section **3b** with a density of 100 g/l as the load reducing structure.

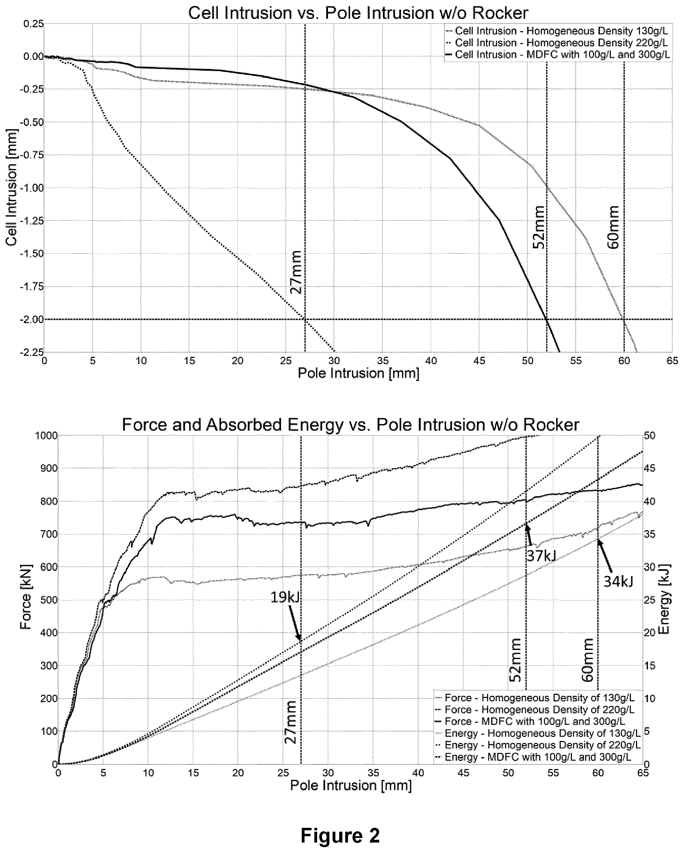

**Figure 2** shows the results of the simulated pole intrusion test without a rocker **6**. The upper diagram of cell intrusion in dependence on the pole intrusion shows the maximum cell intrusion, wherein 2 mm marks the limit where damage of the battery cells **2** is estimated to start. A direct load transfer onto the cells has been observed for the comparative example of the 220 g/l foam, whereas a significant unloading has been measured for the comparative example of the softer 130 g/l foam and the example of the multi-density foam component **3** which results in higher allowable intrusions.

The lower diagram shows the force and the absorbed energy in dependence on the pole intrusion. The absorbed energy has been determined at the onset of cell damage. The comparative example of the 220 g/l foam showed high forces but low energy absorption capabilities when compared with the comparative example of the softer 130 g/l foam and the example of the multi-density foam component **3**. Moreover, the example of the multi-density foam component 3 was able to absorb 10 % more energy than the comparative example of the softer 130 g/l foam.

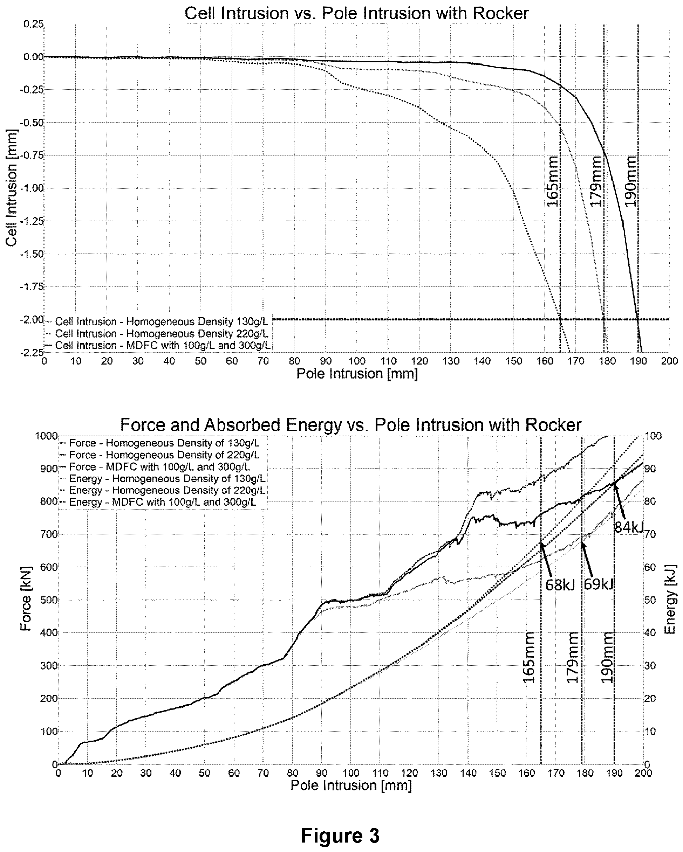

**Figure 3** shows the results of the simulated pole intrusion test with a rocker **6**. Here the multi-density foam component **3** according to this disclosure shows its full potential. The upper diagram of cell intrusion in dependence on the pole intrusion again shows the maximum cell intrusion, wherein 2 mm marks the limit where damage of the battery cells **2** is estimated to start. When compared with both homogeneous foams of the comparative examples, the multi-density foam component **3** according to this disclosure has shown the highest allowable pole intrusions, while transferring the lowest loads onto the battery cells **2** of all three simulated foam components.

The lower diagram again shows the force and the absorbed energy in dependence on the pole intrusion. Also in this category, the multi-density foam component **3** according to this disclosure has shown the best performance. While the homogeneous foams of the comparative examples have absorbed comparable energies until cell damage but at different force and displacement levels, the multi-density foam component **3** according to this disclosure has combined an elevated force level (when compared to the 130 g/l foam comparative example) with high displacements (when compared to the 220 g/l foam comparative example). Hence, the multi-density foam component **3** according to this disclosure has achieved a significantly higher absorbed energy which increased by 22 % from 69 kJ to 84 kJ.

The improved results with rocker **6**, when compared to the results without a rocker 6, can be explained by the supporting function of the integral section **3a** with a high-density foam on the folding of the rocker **6** profile, which leads to a more effective compression of the extrusion.

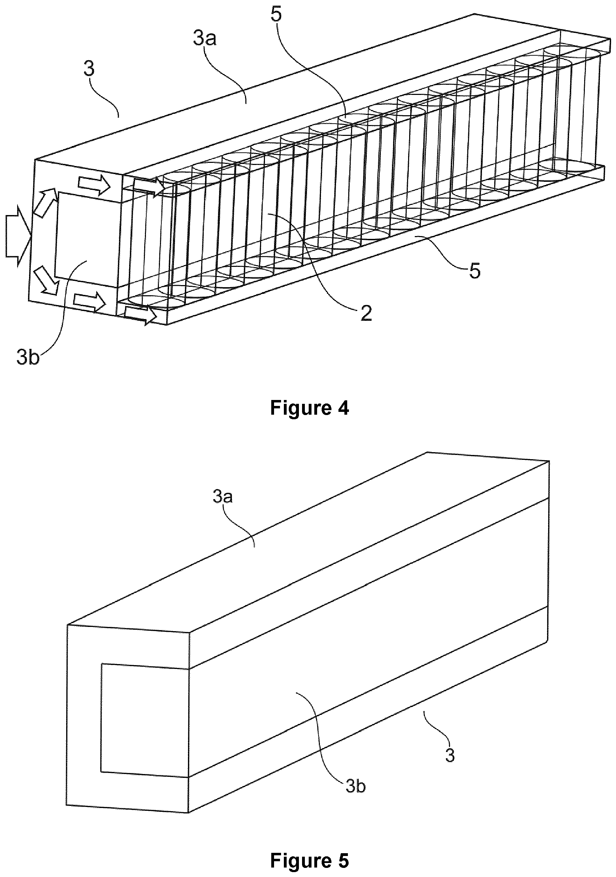

**Figure 4** schematically shows the load transfer of a multi-density foam component **3** with two integral sections **3a**, **3b** according to the disclosure around the battery cells **2** and into the connecting parts **5**. The resulting main load paths are indicated by the arrows. As in Figure 1, the multi-density foam component **3** has a first integral section **3a** with a high density as the load carrying structure and a second integral section **3b** with a low density as the load reducing structure. An impact from the left side with a high load indicated by the big arrow will be reduced and diverted by the first integral section **3a** into the cell surrounding and/or supporting structures of the connecting parts **5**. The battery cells **2** are protected by the second integral section **3b** which also prevents the structure of the first integral section **3a** from collapsing.

**Figure** 5 shows a larger view of the multi-density foam component 3 with two integral sections **3a**, **3b** of Figure 4.

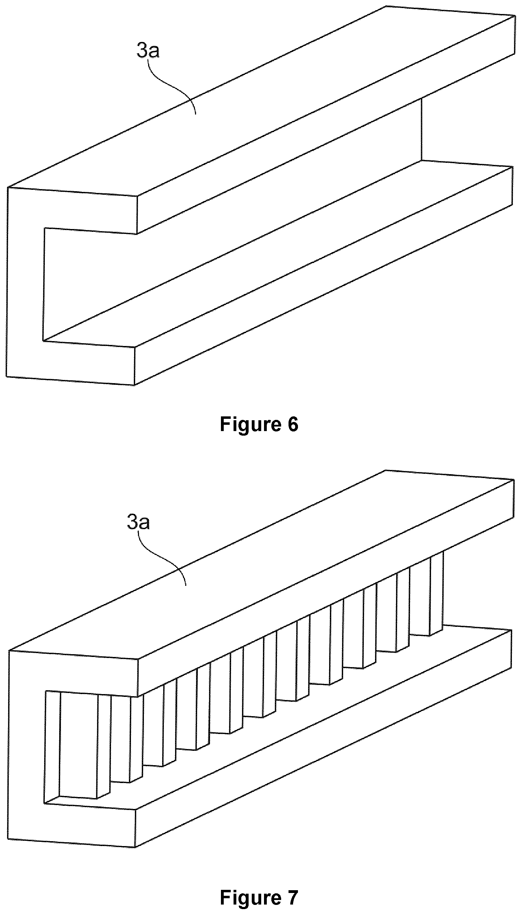

In Figures 6 and 7, there are depicted two alternative design variants of the first integral section **3a** with the high density of the multi-density foam component **3** of Figure 5. **Figure 6** shows a plain rectangular C-shaped first integral section **3a**. **Figure** 7 shows an alternative design of first integral section **3a** with a C-shape including a reinforcing rib structure on its internal vertical surface. These structures are not limited to the pictured vertical cuboidal ribs but may also be arranged horizontally and/or have a semicylindrical or triangular prismatic shape. The shape may essentially be any uniform prism. Further, the rib structure may also additionally or alternatively be arranged on the horizontal surfaces.

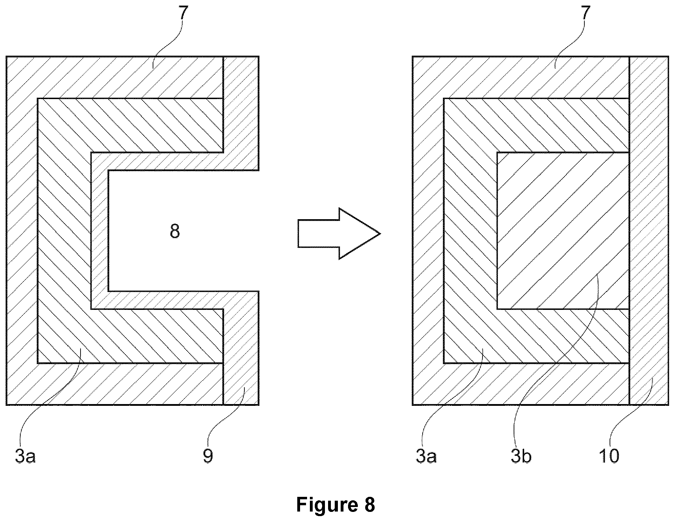

**Figure 8** exemplarily shows in cross-section the mold **7**, first closing plate **9**, and second closing plate **10** of the production steps of the multi-density foam component **3** with two integral sections **3a**, **3b** of Figure 5. In the first step, first integral section **3a** with the higher density is produced. A mold **7** is provided which defines with its cavity **8** the outer contour of first integral section **3a**. The cavity **8** is filled with raw materials for the first foam creation process. These raw materials can either be a foam raw material, such as e.g. EPP spheres or balls, or foam monomers. The mold **7** is then closed with the first closing plate **9** which defines the inner shape of the first integral section **3a** and the outer surface which is facing the open side of the mold **7**. For example, in case of foam monomers, the mold **7** may be closed with the first closing plate **9** prior to injecting them into the closed mold. If needed to achieve the desired foam density, pressure can be applied either onto the first closing plate **9** or the mold **7**. Thereafter, the foam creation process is performed, for example by applying heat to the mold **7** to initiate expanding and adhesion of the EPP spheres. This situation is shown on the left side of Figure 8.

After completion of the foam creation process, the first closing plate **9** is removed and the raw materials for the second foam creation process for the second integral section **3b** is filled into the cavity **8** of the mold **7** including the first integral section **3a**. Hence, the outer contour of second integral section **3b** is defined by the inner contour of first integral section **3a** and its inner shape and the outer surface which is facing the open side of the mold **7** by the second closing plate **10** which is used to close the mold **7**. The selection of the raw materials has to ensure the adhesion to the integral sections manufactured in prior steps. In this example shown on the right side of Figure 8, the second integral section **3b** does not have an inner contour as the multi-density foam component **3** to be produced has a cuboid shape and only two integral sections. Hence, second closing plate **10** can be a simple flat plate. After completion of the second foam creation process, the second closing plate **10** is removed and the finished multi-density foam component **3** can be taken out.

If the desired multi-density foam component **3** has more than two integral sections, the process of foam creation is correspondingly repeated with respective closing plates for each further integral section. The further integral sections do not have to be arranged shell-like but may, for example, be arranged side-by-side. This can be used to tailor the load reducing effect to the specific design of the battery cells **2** (such as cell and electronics).

### Reference numerals

- **1**: battery tray
- **2**: battery cell
- **3**: multi-density foam component
- **3a, 3b**: integral section
- **4**: supporting structure
- **5**: connecting part
- **6**: rocker
- **7**: mold
- **8**: cavity
- **9**: first closing plate
- **10**: second closing plate

## Claims

1. A battery tray (**1**) for a vehicle battery comprising
- one or more battery cells (**2**);
- at least one multi-density foam component (**3**) having at least two integral sections (**3a**, **3b**) of different densities; and
- at least one rigid supporting structure (**4**);
wherein the at least one multi-density foam component (**3**) is at least partially arranged between the one or more battery cells (**2**) and the at least one rigid supporting structure (4); and
the integral section (**3a**) having a higher density abuts at least partially the rigid supporting structure (**4**) and the integral section (**3b**) having a lower density abuts at least partially the battery cells (**2**).

2. The battery tray (**1**) according to claim 1, wherein the vehicle battery is a traction battery of a hybrid or electrical vehicle.

3. The battery tray (**1**) according to claim 1 or 2, the integral section (**3a**) having a highest density of the at least one multi-density foam component (**3**) essentially has a cross-sectional shape of a C- or U-shape, a pointed arch shape, or a semicircular shape.

4. The battery tray (**1**) according to at least one of the preceding claims, wherein the integral section (**3a**) having a highest density of the at least one multi-density foam component (**3**) essentially has a C- or U-shape with an open side of its contour facing towards the inside of the battery tray and the integral section(s) (**3b**) having a lower density is/are arranged inside the contour.

5. The battery tray (**1**) according to at least one of claims 3 or 4, wherein at least one surface of the integral section (**3a**) having a highest density of the at least one multi-density foam component (**3**) comprises a rib structure.

6. The battery tray (**1**) according to at least one of the preceding claims, wherein a density of the at least one multi-density foam component (**3**) spans a range of from 50 g/l to 400 g/l or from 60 g/l to 375 g/l or from 75 g/l to 350 g/l.

7. The battery tray (**1**) according to at least one of the preceding claims, wherein
- a density of the integral section (**3a**) having a higher density spans a range of from 225 g/l to 400 g/l or from 250 g/l to 375 g/l or from 275 g/l to 350 g/l; and/or
- a density of the integral section (**3b**) having a lower density spans a range of from 50 g/l to 175 g/l or from 60 g/l to 150 g/l or from 75 g/l to 125 g/l.

8. The battery tray (**1**) according to at least one of the preceding claims, wherein the at least one multi-density foam component (**3**) comprises one or more of expanded polypropylene (EPP), expanded polystyrene (EPS), expanded polyethylene (EPE), polyurethane rubber (PUR), and polyethylene terephthalate (PET) foam.

9. The battery tray (**1**) according to at least one of the preceding claims, wherein a rocker (**6**) abuts at least partially a face of the at least one rigid supporting structure (**4**) opposite a face where the at least one multi-density foam component (**3**) abuts.

10. A method for producing a multi-density foam component (**3**) having at least two integral sections (**3a**, **3b**) of different densities comprising
(a) providing a mold (**7**) having a cavity (**8**) which is open on one side and corresponds to a desired outer surface of a first integral section (**3a**) of the multi-density foam component (**3**);
(b) filling raw materials for a first foam creation process into the cavity (**8**) of the mold (**6**);
(c) closing the open side of the cavity (**8**) of the mold (**7**) with a first closing plate (**9**) having a surface corresponding to a desired inner surface of the first integral section (**3a**) of the multi-density foam component (**3**), performing the foam creation process to create the first integral section (**3a**) of the multi-density foam component (**3**), and removing the first closing plate (**9**) from the cavity (**8**);
(d) filling raw materials for a second foam creation process into the cavity (**8**) of the mold (7) including the first integral section (**3a**);
(e) closing the open side of the cavity (**8**) of the mold (**7**) with a second closing plate (**10**) having a surface corresponding to a desired inner and/or outer surface of a second integral section (**3b**) of the multi-density foam component (**3**), performing the foam creation process to create the second integral section (**3b**) of the multi-density foam component (**3**), and removing the second closing plate (**10**) from the cavity (**8**), wherein an outer surface of the second integral section (**3b**) of the multi-density foam component (**3**) is formed by the inner surfaces of the first integral section (**3a**) and/or the cavity (**8**) and/or the second closing plate (**10**); and
(f) repeating steps (d) and (e) for each further desired integral section;
wherein the steps of filling raw materials into the cavity (**8**) and closing the open side of the cavity (**8**) of steps (b)/(c) and (d)/(e) may be performed in reverse order.
